(19) Europäisches Patentamt

European Patent Office

Office européen des brevets

(11) EP 0 863 561 A1

(12) EUROPEAN PATENT APPLICATION

(43) Date of publication:
09.09.1998 Bulletin 1998/37

(51) Int. Cl.$^6$: H01M 4/50

(21) Application number: 98104074.4

(22) Date of filing: 06.03.1998

(84) Designated Contracting States:
AT BE CH DE DK ES FI FR GB GR IE IT LI LU MC NL PT
Designated Extension States:
AL LT LV MK RO SI

(30) Priority: 06.03.1997 JP 51324/97
09.09.1997 JP 243803/97

(71) Applicant:
MATSUSHITA ELECTRIC INDUSTRIAL CO., LTD.
Kadoma-shi, Osaka 571 (JP)

(72) Inventors:
• Nunome, Jun
Moriguchi-shi, Osaka 570 (JP)
• Nitta, Yoshiaki
Hirakata-shi, Osaka 573 (JP)
• Yoshizawa, Hiroshi
Hirakata-shi, Osaka 573-01 (JP)

(74) Representative:
Kügele, Bernhard et al
NOVAPAT INTERNATIONAL SA,
9, Rue du Valais
1202 Genève (CH)

(54) **Manganese-oxide alkaline batteries**

(57) The present invention provides improvement of discharge performance and higher capacity of alkaline-manganese batteries by employing in the positive active material manganese oxides mainly comprising surface-modified manganese dioxide which has been prepared by treatment electrolytic manganese dioxide with an aqueous solution of $H_2SO_4$ acidified titanic sulfate thereby forming on at least part of the surface of manganese dioxide particles a double oxide of manganese and titanium.

EP 0 863 561 A1

**Description**

BACKGROUND OF THE INVENTION

The present invention relates to so-called alkaline-manganese batteries that employ alkaline aqueous solution mainly comprising potassium hydroxide (KOH) as the electrolyte solution, manganese oxides mainly comprising manganese dioxide as the positive active material, and zinc or zinc alloy as the negative active material, and more specifically to the positive active material of these batteries.

In association with increasing variety of portable electrical and electronic equipment, power supplies based on various battery systems are in use in recent years. Penetration of alkaline-manganese batteries has been steadily increasing because of their higher capacity and splendid heavy duty performance when compared with carbon-zinc dry cells and batteries which have heretofore been most widely used. Along with this trend, there is a demand for higher capacity alkaline-manganese batteries to allow still longer operation of equipment. In achieving higher capacity of alkaline-manganese batteries, various methods have been adopted to increase the quantity of positive and negative active materials such as by increasing the internal volume of cells by making the side wall of cell can thinner, making separators thinner by using high density fine fibers, or by reducing through its improvement the quantity of graphite to be added in the positive electrode as a conductive agent.

The manganese dioxide ($MnO_2$) used as the positive active material of alkaline-manganese batteries is capable of two-electron reduction in an alkaline electrolyte solution and is divided into regions of ($MnO_2$- $MnO_{1.5}$) and ($MnO_{1.5}$- $MnO_{1.0}$). The practically effective discharge voltage of alkaline-manganese batteries depends on the former region, namely ($MnO_2$-$MnO_{1.5}$), which is a uniform solid phase reaction region. The discharge reaction in that region can be expressed as below:

$$MnO_2 + H_2O + e^- \rightarrow MnOOH + OH^- \tag{1}$$

The electrode potential can be expressed by the following Nernst's equation:

$$E = E_0 \, RT/F \, \cdot \, \ln[Mn^{3+}]_{solid}/[Mn^{4+}]_{solid} - RT/F \, \cdot \, \ln[OH^-] \tag{2}$$

The actually measured slope of S-shaped discharge curve of the positive electrode is approximately twice that predicted from Eqn. (2). From Eqn. (1), the theoretical capacity of $MnO_2$ is calculated to be 308 mAh/gr. However, in reality, generally used electrolytic manganese dioxide (EMD) comprises hydrated $MnO_2$ which contains roughly 10% of water. Also, since electrolyte solution of actual alkaline-manganese batteries is an aqueous solution of KOH containing zinc ions or zincate ions, not all of the $MnO_2$ changes to manganese oxyhydroxide (MnOOH) due to discharge as can be expected from Eqn. (1) but a part of it produces as a byproduct double oxide of manganese and zinc such as heterolite ($ZnO \cdot Mn_2O_3$). Such a byproduct of discharge reaction lowers electron conductivity of $MnO_2$ positive electrode causing an increase in its internal resistance and at the same time hindering diffusion of protons into inside $MnO_2$ particles thereby causing an increase in concentration polarization. Such increases in the internal resistance and concentration polarization of the positive electrode cause reduction of potential of the positive electrode during discharge especially near the end period of discharge. As a result, a discharge capacity lower than the theoretical value could have been obtained.

Consequently, in order to suppress decrease of closed circuit voltage during discharge, it has been tried to improve discharge performance by lowering the internal resistance as well as by decreasing concentration polarization. As a method of lowering the internal resistance, formation of a thin carbon paint coating film on the inside surface of a cell can where positive electrode mix mold comes in contact has been proposed. As a method of reducing concentration polarization, it has been proposed to mix anatase type titanium dioxide ($TiO_2$) powders into electrolytic manganese dioxide (EMD) powders to be used as the positive active material together with graphite powders as is disclosed in U.S. Pat. No. 5,342,712. However, the effect of addition of the anatase type $TiO_2$ lacks reproducibility and suffers dispersion making it impractical.

SUMMARY OF THE INVENTION

The object of the present invention is to achieve higher capacity of alkaline-manganese batteries by employing positive active material which has been applied with surface modification by forming on the surface of manganese oxide particles mainly comprising $MnO_2$ a layer of double oxide of manganese and titanium. By employing such surface-modified manganese oxide, internal resistance of the positive electrode is reduced and at the same time concentration polarization during discharge is reduced, thereby exhibiting an effect of suppressing decrease in the closed circuit voltage near the end period of discharge.

BRIEF DESCRIPTION OF THE DRAWINGS

Fig. 1 is a partially cut-out view of an LR6 type alkaline-manganese battery.

Fig. 2 shows an example of 100 mA constant-current discharge curve of a prototype of alkaline-manganese battery in comparison with that of a conventional alkaline-manganese battery.

Fig. 3 shows electron-spin resonance (ESR) spectra of various manganese oxides.

Fig. 4 shows Raman spectra of various manganese oxides.

Fig. 5 shows an example of weight change ratio curves of various manganese oxides as a function of temperature.

Fig. 6 shows relationship between titanium content in manganese oxide and the discharge capacity ratio.

Fig. 7 shows relationship between relative values of oxygen coordination number of manganese oxides and the discharge capacity ratio.

DETAILED DESCRIPTION OF THE INVENTION

Embodiments:

Details of the present invention will be explained in the following in terms of embodiments referring to drawings and tables.

First Embodiment:

Sample No. 1.

(1) Preparation of EMD

The solution of manganese sulfate ($MnSO_4$) is extracted from manganese ore by means of an aqueous solution of sulfuric acid ($H_2SO_4$). The ferrous sulfate dissolved in the $MnSO_4$ solution is then oxidized to ferric sulfate by adding of a small quantity of $MnO_2$ fine powders and aeration. Subsequently, the ferric sulfate is precipitated as hydroxides by neutralizing the solution by adding calcium carbonate powders while stirring. The $MnSO_4$ solution is then filtered to remove the precipitated ferric hydroxide together with undissolved components of the ore, thus obtaining an aqueous solution of primary refined $MnSO_4$. By adding to this aqueous solution of primary refined $MnSO_4$, hydrogen sulfide ($H_2S$) or barium sulfide (BaS), heavy metals such as copper and nickel are precipitated as sulfides. The sediment is then filtered out to obtain refined aqueous solution of $MnSO_4$. Using the refined aqueous solution of $MnSO_4$ as the electrolyte, a titanium plate as the anode, a graphite plate as the cathode, electrolysis is then performed at a temperature 90°C or above and with a current density of 1.0 $A/dm^2$. The EMD electrodeposited on the anode is then scraped off, followed by coarse pulverization and repeated washing with warm water. It is then further pulverized on a roller mill to an average particle diameter of 50 mm and dried to obtain EMD powders.

(2) Titanium Treatment

First, a titanium treatment solution is prepared by dissolving in distilled water $H_2SO_4$ and then titanic sulfate ($Ti(SO_4)_2 \cdot 9H_2O$). The composition of the titanium treatment solution is chosen to be 2.0 mol/l $H_2SO_4$, 0.2 mol/l $Ti(SO_4)_2$.

Titanium treatment was performed by introducing 300 gr of EMD powders into 1.0 liter of the above titanium treatment solution and stirring for 1.0 hour at 70°C. Subsequently, titanium-treated EMD is separated by filtration, repeatedly washed with water, neutralized, and dried to obtain Sample No. 1. An aqueous solution of sodium hydroxide (NaOH) is used for neutralization.

Sample No. 2.

After repeatedly washing EMD which has been titanium-treated under the same conditions as the Sample No. 1, it is separated by filtration and subjected to acid treatment.

The acid treatment is performed by introducing the titanium-treated EMD into 1 liter of an aqueous solution of 2.0 mol/l of $H_2SO_4$ and stirring for 22 hours at 50°C.

After the acid treatment, the EMD is separated by filtration, repeatedly washed with water, neutralized by NaOH, filtered, and dried to obtain Sample No. 2.

Sample No. 3.

Sample No.3 is obtained by acid treatment, filtration, washing with water, neutralization, filtration, and drying under the same conditions as the Sample No.2 with the exception of introducing into the titanium treatment solution oxygen $(O_2)$ gas at a flow rate of 50 ml/min during the titanium treatment.

Sample No. 4.

Sample No. 4 is obtained by the same conditions of acid treatment, filtration, washing with water, neutralization, filtration, and drying as the Sample No. 2 with the exception of using as the titanium treatment solution further added with $MnSO_4$ to a concentration of 0.2 mol/l.

(3) Fabrication of Batteries.

Using the manganese oxide powder Sample Nos. 1 to 4 in the positive active material, AA-size LR6 type alkaline-manganese batteries were fabricated. For the purpose of comparing with the samples in the embodiments of the present invention, EMD powders obtained by the process (1) above is further repeatedly washed with water, neutrarized, filtered, and dried to obtain EMD powder sample not treated with either or neither of titanium and acid treatments. The sample thus obtained is referred to as Prior Art 1. A uniform mixture of untreated EMD powders of the Prior Art 1 and 5.0 weight % of anatase type $TiO_2$ powders the space group of which has a crystalline structure of $I4_1/amd$ is also prepared and is referred to as Prior Art 2. Using the manganese oxide powders prepared by the Prior Art 1 and Prior Art 2, LR6 type alkaline-manganese batteries have been fabricated under the same conditions.

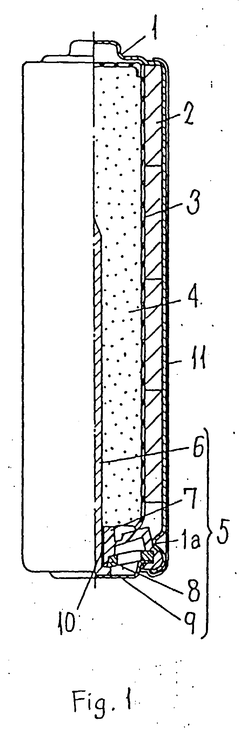

Fig. 1 is a partially cut-out view of a fabricated LR6 type alkaline-manganese battery. In Fig. 1, a plurality of positive electrode mix 2 formed in a hollow cylindrical shape is inserted in a cell can 1 made of nickel plated steel sheet, wherein the cap portion forming a positive terminal is integrally formed onto the bottom of the can, and pressed to ensure close contact between the positive electrode mix 2 and the inside wall of the cell can 1. Inside the positive electrode mix 2 is disposed a separator 3, inside which gelled negative electrode mix 4 is poured. An assembling and sealing structure 5 comprises a negative electrode collector 6 made of brass, a gasket 7 made of polyamide, a washer 8, and a bottom plate 9 made of nickel plated steel sheet which also functions as the negative terminal. Between the negative electrode collector 6 and the gasket 7 is applied sealant 11. An inwardly protruding groove 1a is provided near the opening and inside of the cell can 1. The assembling and sealing plate 5 is inserted until it reaches the protruding groove 1a, whereupon peripheral of the opening of the cell can 1 is curled inwardly thereby pressing the gasket 7 and completing sealing. A cell is completed by finally attaching a label 11.

The positive electrode mix has been prepared by mixing at a weight ratio of 93:7 manganese oxide powders of Prior Arts 1 and 2 and Sample Nos. 1 to 4 according to the First Embodiment of the present invention with graphite powders to be used as conducting agent, and molding under pressure. The gelled negative electrode mix has been prepared by adding 2 parts in weight of zinc alloy powders to 1 part in weight of a viscous electrolyte prepared by dissolving sodium polyacrylate by 3 weight % and carboxymethyl cellulose by 1 weight % in an aqueous solution of 40 weight % KOH which has been dissolved with zinc oxide (ZnO) by 3 weight %.

(4) Discharge Test of the Batteries.

Five cells based on different manganese oxide types are subjected to discharge at constant-currents of 100 mA and 1.0 A at room temperature to obtain the capacity until they reach an end voltage of 0.9 V.

(5) Analysis of the Manganese Oxides.

Table 1 shows titanium (Ti) contents in the manganese oxides in Sample Nos. 1 to 4 in the First Embodiment of the present invention and in Prior Arts 1 and 2 as obtained by inductively coupled plasma-atomic emission spectroscopy (ICP-AES) and corresponding discharge capacities at constant-currents of 100 mA and 1.0 A. The discharge capacities are average of 5 cells and are represented as relative values with the capacity of the Prior Art 1 set as 100.

Table 1

| Type | Ti Cont. (wt %) | 100 mA Discharge Capacity Ratio | 1.0 A Discharge Capacity Ratio |
|---|---|---|---|
| Sample #1 | 0.40 | 107 | 105 |
| #2 | 0.32 | 108 | 106 |
| #3 | 0.15 | 106 | 105 |
| #4 | 0.34 | 107 | 104 |
| Prior Art 1 | 0.00 | 100 | 100 |
| 2 | 3.00 | 101 | 101 |

From the Table 1, it can be seen that in all of the Sample Nos. 1 to 4 of the First Embodiment of the present invention, for both 100 mA and 1.0 A constant-current discharge, the discharge capacities have clearly increased over the Prior Art 1 which is based on untreated EMD. In contrast to this, in the Prior Art 2 which is based on untreated EMD added with anatase type $TiO_2$, the discharge capacity increased only slightly over the Prior Art 1.

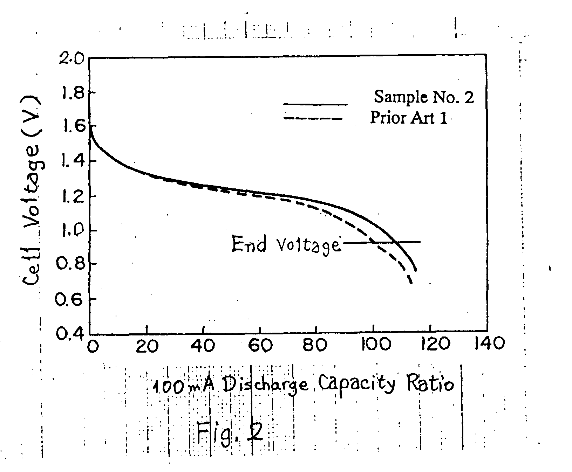

Fig. 2 shows typical 100 mA constant-current discharge curves of Sample No. 2 of the First Embodiment of the present invention which has been treated with acid after titanium treatment and the Prior Art 1 using untreated EMD. It can be seen that, although there is not much difference between the two curves until the middle of discharge period in the vicinity of 1.2 V, the decrease of the closed circuit voltage of the cell using the Sample No. 2 of the First Embodiment of the present invention is slower at the end period of the discharge. As a result, the discharge capacity until the end voltage of 0.9V has increased in the case of the Sample No. 2 of the First Embodiment of the present invention.

After discharging at a constant-current of 100 mA LR6 type alkaline-manganese batteries that employ as the positive active material manganese oxides of Sample Nos. 1 to 4 of the First Embodiment of the present invention and that of the Prior Arts 1 and 2, and stopping the discharge at the end period of discharge (at 250 mAh/gr which corresponds to 81.2% of the theoretical capacity), each cell was immediately disassembled and the discharge products of the positive electrode mix were analyzed by x-ray diffraction method. As a result, it was found that while the positive electrode mix of the Prior Arts 1 and 2 showed strong intensity peaks presumably resulting from $ZnO \cdot Mn_2O_3$ (heterolite) or $Mn_3O_4$, the positive electrode mixes using the Samaple Nos. 1 to 4 of the First Embodiment of the present invention all showed extremely weak intensity peaks. Consequently, it can be considered that, in the alkaline-manganese batteries employing as the positive active material manganese oxides according to the present invention, generation of byproduct of discharge reaction such as heterolite has been suppressed which would otherwise cause an increase in the internal resistance of the positive electrode toward the end period of discharge and also an increase in the concentration polarization.

Table 2 shows the distance between titanium and oxygen atoms and the coordination numbers of oxygen atoms that surround titanium atoms as obtained by extended x-ray absorption fine structure (XAFS) analysis of manganese oxides of Sample No. 2 (titanium- and acid-treated EMD) as a typical example according to the present invention and of the Prior Art 2 (untreated EMD added with 5.0 wt% anatase type $TiO_2$).

Table 2

| Type | Inter-atomic Distance (Å) | Coord. Number |
|---|---|---|
| Sample #2 | 2.04 | 1.5 |
| Prior Art 2 | 1.96 | 6.0 |

The Ti-O structure of the Prior Art 2 shows the structure of anatase type $TiO_2$, with a Ti-O inter-atomic distance of 1.96Å and a coordination number of 6 of oxygen atoms surrounding titanium atoms. In contrast to this, with the manganese oxide according to the present invention as represented by the Sample No. 2, the coordination number of oxygen atoms surrounding titanium atoms is 1.5, which is only 25% that of anatase type $TiO_2$. Taking its longer Ti-O inter-atomic distance of 2.04Å also into account, it can be understood that it has a coordination structure different from that of the conventional EMD added with anatase type $TiO_2$.

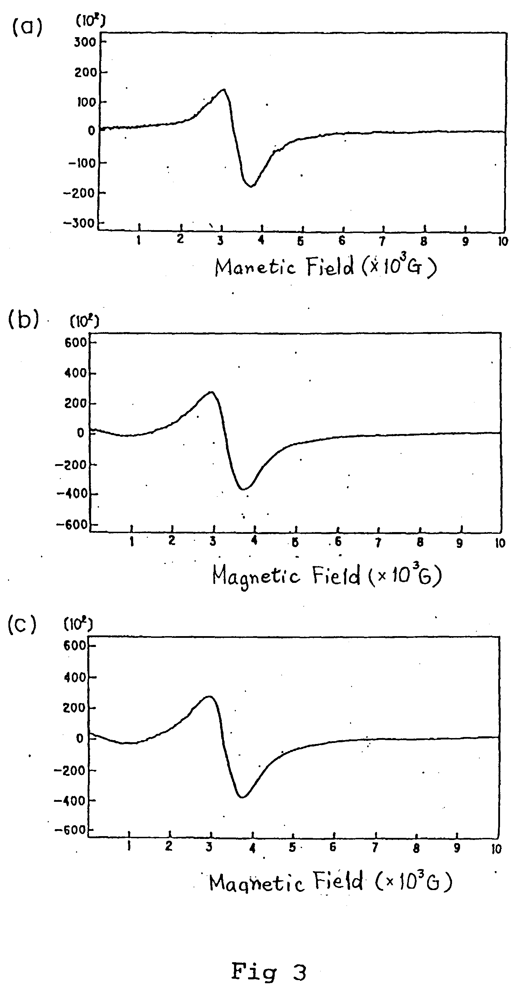

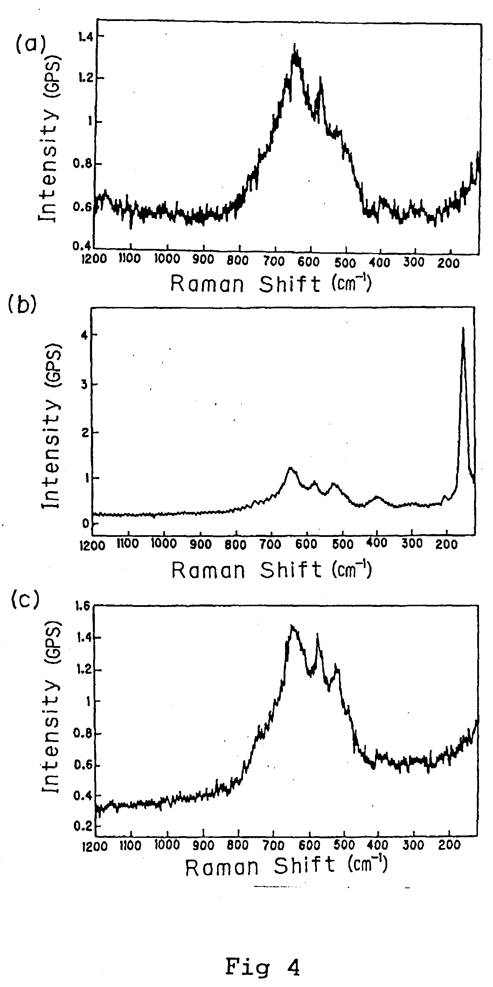

Next, for (a) manganese oxide of the Sample No. 2, (b) unprocessed EMD of the Prior Art 1 added with 5.0 weight % of anatase type $TiO_2$, and (c) unprocessed EMD of the Prior Art 1, ESR data (primary differential calculus) measured at 10°K and their Raman spectra are respectively shown in Fig. 3 and Fig. 4.

In Fig. 3, in all of the manganese oxides (a), (b), and (c), broad signals are observed in the vicinity of 3300 G (gauss) (0.33 T (tesla)). These can be attributed to the manganese in the EMD. Spectra of (b) and (c) are approximately the same. The EMD of (b), namely, Prior Art 2, has been prepared by adding anatase type $TiO_2$ to (c) of the Prior Art 1. However, it can be seen that this addition has not caused any change in the electron state of manganese in the EMD of (b). In contrast, the spectrum at around 1500 G (0.15 T) of the manganese oxide (a) of the Sample No. 2 according to the present invention is different from that of (c). The spectral absorption in the range 1200 to 1800 G (0.12 to 0.18 T) is considered to be due to the change in the electron state of manganese itself caused by the diffusion of titanium into the surface structure of manganese oxides thus forming a solid solution of manganese and titanium resulting in some kind of double oxide.

Comparing Raman spectra in Fig. 4, one will find in (b) a sharp peak at 140 $cm^{-1}$ indicating a Raman band of anatase type $TiO_2$. However, in the manganese oxide (a), namely, the Sample No. 2 according to the present invention, no peak could be observed either at 440 $cm^{-1}$ or 610 $cm^{-1}$ which corresponds to the Raman band of rutile type $TiO_2$ to say nothing of the above peak. Although the Raman spectra of (a) and (c) are similar, intensity of the peak of the Raman band in the vicinity of 520 $cm^{-1}$ is slightly lower in (a) than in (c).

As manganese oxides mainly comprising $MnO_2$ are dark black color, information on the surface of these manganese oxides can be collected by Raman spectroscopy. From the surface information in Fig. 4, it can be seen that the surface of manganese oxide powder of the Sample No. 2 according to the present invention does not contain anatase type or rutile type crystalline $TiO_2$. Also, it is considered that the existence of titanium has caused a difference in the symmetry of the manganese oxides from that of the Prior Art 1 using untreated EMD.

From the findings shown in Table 2, Fig. 3 and Fig. 4, it can be said that, in the manganese oxide powder of the Sample No. 2 prepared by the First Embodiment of the present invention, titanium has penetrated into the manganese oxide structure on at least part of the powder surface and has formed a layer of a double oxide of manganese and titanium. It is further considered likely that the manganese oxide surface is not in a state in which crystalline $TiO_2$ would precipitate and remain.

Subsequently, thermogravimetric analysis by a thermobalance was made of the manganese oxides of the Sample Nos. 1 to 4 in the First Embodiment of the present invention and of the Prior Arts 1 and 2, under conditions of atmosphere and temperatures from 25°C to 1,100°C at a temperature rise rate of 10°C/min. As the sample vessel, an alumina-ceramic pan was used while a-alumina was used as a reference sample. The manganese oxide samples were dried for 12 hours at 60°C, after which approximately 35 mg was taken on a balance. Table 3 shows the results of measurement.

Table 3

| Type | Weight Reduction Ratio between 650-850°C (%) | Weight Reduction Ratio between 850-990°C (%) |
|---|---|---|
| Sample #1 | 0.8 | 0.9 |
| #2 | 0.6 | 1.2 |
| #3 | 0.4 | 2.4 |
| #4 | 0.7 | 1.0 |
| Prior Art 1 | 0.2 | 2.8 |
| 2 | 0.2 | 0.9 |

The ratio of weight reduction in the temperature ranges 650-850°C and 850-990°C in Table 3 is the percentage of reduced weight of manganese oxides relative to the weight before measurement.

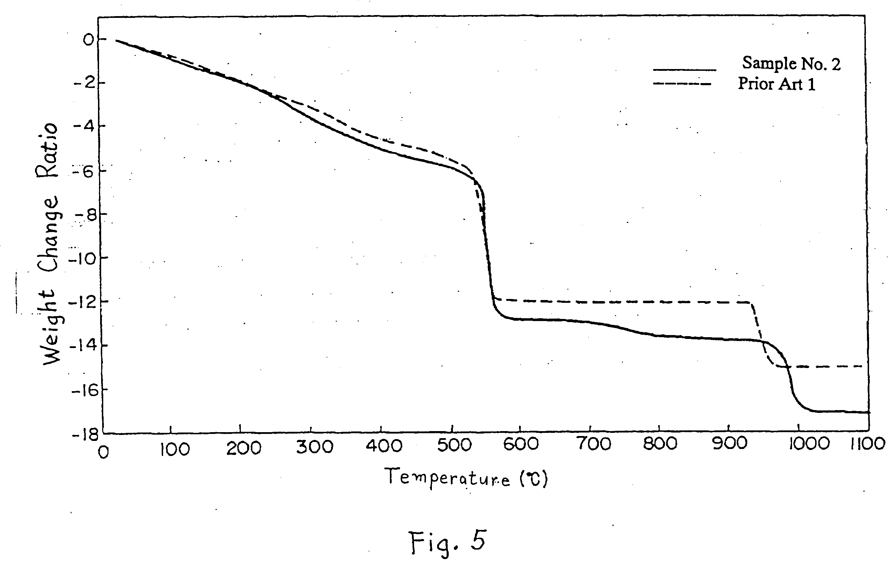

Fig. 5 shows change of weight reduction ratio with temperature of manganese oxides of the Sample No. 2 in the First Embodiment of the present invention and of Prior Art 1.

While the weight reduction ratio in the temperature range of 650-850°C of manganese oxides of Sample Nos. 1 to 4 in the First Embodiment of the present invention was between 0.4 and 0.8% with the average being approximately 0.6%, that of the Prior Arts 1 and 2 was 0.2%. Judging from Fig. 5, this difference may be attributed to the fact that the weight of the manganese oxides of the Sample No. 2 according to the present invention starts to gradually decrease in the vicinity of 780°C. This phenomenon of weight reduction is characteristic of manganese oxides according to the present invention.

It is to be noted that while the weight reduction ratio in the temperature range 850 to 990°C of the manganese oxides according to the present invention was 2.4% or lower, that of the manganese oxides in the Prior Art 1 (untreated EMD) was 2.8%. Manganese dioxide ($MnO_2$) such as usual EMD will decompose at 850°C to become $Mn_2O_3$. As the temperature at which it further changes to a lower grade manganese oxide $Mn_3O_4$ is above 1,000°C, it should be remaining $Mn_2O_3$ at 990°C. The weight reduction ratio at 990°C is calculated to be less than 3%.

While the reason for the dispersion of weight reduction ratio of the manganese oxides according to the present invention in the temperature ranges 650-850°C and 850-990°C is not clear, it may be related to the content of titanium introduced to the manganese oxides through titanium treatment.

Second Embodiment:

After changing the composition of the treatment solution, treatment temperature and treatment time, etc., of the titanium treatment of the First Embodiment, samples of manganese oxides were prepared by acid treatment, filtration, washing with water, neutralization, filtration, and drying under the same conditions as the Sample No. 2. Using these manganese oxides as the positive active material, LR6 type alkaline-manganese batteries were fabricated under the same conditions as the First Embodiment, and were subjected to a discharge test.

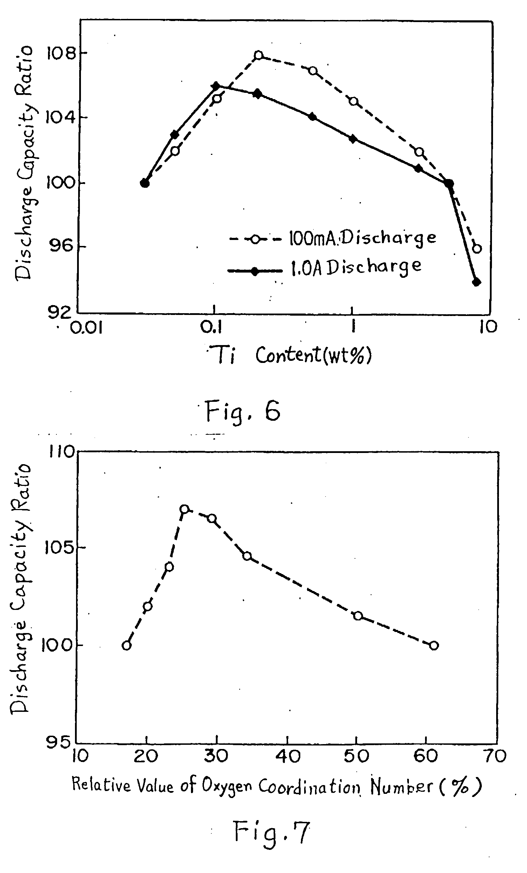

Fig. 6 shows the relationship between titanium content as obtained by ICP-AES analysis of the manganese oxides prepared in this Second Embodiment and the discharge capacities at 100 mA and 1.0 A constant-current discharge. The values of discharge capacity ratio in the ordinate represent values relative to the capacity (100) of the cell fabricated by using untreated EMD in the First Embodiment.

From Fig. 6, it can be seen that in the titanium content range of 0.05-5.0 weight % of the manganese oxides, the batteries in this Embodiment showed higher capacity than that based on untreated EMD. It can also be seen that the titanium content range of 0.1-1.0 weight % is more appropriate to realizing higher capacity.

Fig. 7 shows relationship between the relative values of coordination number of oxygen atoms surrounding titanium atom as obtained by XAFS analysis and the discharge capacity at 100 mA constant-current. At present, it is difficult to precisely establish by XAFS analysis absolute value of the coordination number of oxygen in manganese oxides. For this reason, in Fig. 6, relative values are shown with the coordination number 6.0 of the oxygen atoms surrounding titanium atom in the manganese oxides in the Prior Art 2 (anatase type $TiO_2$ having a crystal structure of a space group $I4_1/amd$ being added by 5.0 weight % to untreated EMD) used as the reference. It can be seen from Fig. 6 that, when the relative value of coordination number of oxygen atoms surrounding titanium atoms of the manganese oxides is in the range of 20 to 50% that of anatase type $TiO_2$, the batteries of this Embodiment have higher capacity than that based on untreated EMD (Prior Art 1). Especially the range of 25 to 30% of relative value of the oxygen coordination number is found to be appropriate to realizing high capacity.

The present invention has achieved higher capacities of manganese-alkaline batteries by employing positive active material that has been prepared by surface modification whereby a layer of double oxide of manganese and titanium is formed by titanium treatment of EMD under various conditions on at least a part of the surface of the manganese oxide particles mainly comprising $MnO_2$. Higher capacities can be accurately achieved by controlling physical values such as the titanium content of manganese oxides the surface of which has been modified by formation of a double oxide of manganese and titanium, relative values of the coordination number of the oxygen atoms surrounding titanium atoms, ESR spectrum, and reduction of weight with temperature.

Here, while aqueous solution of $H_2SO_4$ acidified titanic sulfate is to be used as the titanium treatment solution, existence in the solution of manganese sulfate will not impede the effect. During titanium treatment, assisting oxidation by bubbling in of air and/or ozone is expected to give added effect to flowing in oxygen gas. Instead of using these oxidizing gases, one can also add to the treatment solution oxidizing agent such as sodium chlorate ($NaClO_3$) and sodium dithionate ($Na_2S_2O_6 \cdot 2H_2O$). The acid treatment followed by the titanium treatment is effective in stabilizing the effect of titanium treatment alone.

Commercially available EMD is prepared by filtering and drying after being washed with water and neutralized with NaOH or soda-ash. The EMD to be subjected to titanium treatment of the present invention is not limited to the type indicated in the Embodiments of the present invention. That is, commercially available EMD or chemical manganese dioxide (CMD) can also be effectively used as the raw material for our purpose.

It will be appreciated that, though the Embodiments of the present invention has described use of zinc alloy powders in the negative active material, use of zinc powders will in no way affect the essential characteristics of the present invention.

**Claims**

1. Alkaline-manganese batteries comprising an aqueous alkaline solution mainly comprising potassium hydroxide as an electrolyte, zinc or zinc alloy as negative active material, and manganese oxides mainly comprising manganese dioxide surface of which being modified by forming a double oxide layer of manganese and titanium on at least part of the particle surface as the positive active material.

2. Alkaline-manganese batteries as recited in claim 1, wherein manganese oxides having a titanium content in the range of 0.05 to 5.0 weight %, preferably in the range of 0.1 to 1.0 weight %, is used in the positive active material.

3. Alkaline-manganese batteries as recited in claim 1, wherein manganese oxides having relative values of coordination number of oxygen atoms surrounding titanium atoms as obtained by extended x-ray absorption fine structure (XAFS) analysis are in the range of 20 to 50%, preferably 25 to 30%, of that of anatase type titanium dioxide are used in the positive active material.

4. Alkaline-manganese batteries as recited in claim 1, wherein manganese oxides having an absorption in the range 1,200-1,800 G or 0.12-0.18 tesla are used in the positive active material.

5. Alkaline-manganese batteries as recited in claim 1, wherein manganese oxides of which the weight reduction ratio in the temperature range 650-990°C is in the range 0.4-0.8 weight % are used in the positive active material.

6. Alkaline-manganese batteries as recited in claim 1, wherein manganese oxides of which the weight reduction ratio in the temperature range 850-990°C is 2.4 weight % or less are used in the positive active material.

Fig. 1

Fig. 2

Fig 3

Fig 4

Fig. 5

Fig. 6

Fig. 7

**European Patent Office**

**EUROPEAN SEARCH REPORT**

Application Number

EP 98 10 4074

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | DE 33 37 568 A (VARTA BATTERIE) 25 April 1985 <br> * claims 1-3 * | 1-6 | H01M4/50 |
| P,X | DE 195 32 073 A (UNIV DRESDEN TECH) 6 March 1997 <br> * claims 1-8 * | 1-6 | |
| P,X | EP 0 789 410 A (MATSUSHITA ELECTRIC IND CO LTD) 13 August 1997 <br> * claims 1-12 * | 1-6 | |
| A | PATENT ABSTRACTS OF JAPAN <br> vol. 016, no. 166 (E-1193), 22 April 1992 <br> & JP 04 014757 A (TOSHIBA BATTERY CO LTD), 20 January 1992, <br> * abstract * | 1-6 | |
| A | EP 0 747 982 A (EVEREADY BATTERY INC) 11 December 1996 <br> * claims 1-19 * | 1-6 | TECHNICAL FIELDS SEARCHED (Int.Cl.6) |
| A | US 5 342 712 A (MIECZKOWSKA JOLA E ET AL) 30 August 1994 <br> * claims 1-13 * | 1-6 | H01M |

The present search report has been drawn up for all claims

| Place of search | Date of completion of the search | Examiner |
|---|---|---|
| THE HAGUE | 22 June 1998 | Battistig, M |

EPO FORM 1503 03.82 (P04C01)